(19) Europäisches Patentamt

European Patent Office

Office européen des brevets

(11) Veröffentlichungsnummer: **0 508 404 A1**

## (12) EUROPÄISCHE PATENTANMELDUNG

(21) Anmeldenummer: **92106074.5**

(22) Anmeldetag: **08.04.92**

(51) Int. Cl.⁵: **B60P 7/13**, B61D 45/00, B65D 88/12

(30) Priorität: **10.04.91 DE 4111690**

(43) Veröffentlichungstag der Anmeldung:
**14.10.92 Patentblatt 92/42**

(84) Benannte Vertragsstaaten:
**AT BE CH DE DK FR IT LI NL SE**

(71) Anmelder: **HOFFMANN INDUSTRIEBAU GMBH**
**Triftenstrasse 115**
**W-4937 Lage/Lippe(DE)**

(72) Erfinder: **Hoffmann, Dietrich**
**Goetheweg 61**
**W-4937 Lage/Lippe(DE)**

(74) Vertreter: **TER MEER - MÜLLER -**
**STEINMEISTER & PARTNER**
**Artur-Ladebeck-Strasse 51**
**W-4800 Bielefeld 1(DE)**

(54) Sicherungsvorrichtung für Transportgestelle.

㊼ Vorrichtung zur Sicherung von mit Gabeltaschen (32) versehenen Transportgestellen (24) auf der Ladefläche (18) eines Transportfahrzeugs oder Containers, dadurch gekennzeichnet, daß unterhalb der Ladefläche längs der Ladekante (40) des Transportfahrzeugs oder Containers eine drehbare Welle (42) angeordnet ist, an der mehrere Halteklauen (38) derart in Längsabständen angeordnet sind, daß sie durch Drehen der Welle in eine Arretierungsstellung schwenkbar sind, in der sie in die Gabeltaschen (32) der auf der Ladefläche stehenden Transportgestelle eingreifen, und daß die Welle durch einen Verriegelungsmechanismus (46) in einer der Arretierungsstellung der Halteklauen entsprechenden Winkelstellung verriegelbar ist.

*Fig. 3*

EP 0 508 404 A1

Die Erfindung betrifft eine Vorrichtung zur Sicherung von mit Gabeltaschen versehenen Transportgestellen auf der Ladefläche eines Transportfahrzeugs oder Containers.

Für den Transport und die Lagerung von Gütern verschiedenster Art werden üblicherweise genormte Paletten aus Holz oder Stahl eingesetzt, die einen glatten Palettenboden und einzelne unter dem Palettenboden angeordnete Füßen aufweisen. Die Füße sind an der Unterseite durch Streben miteinander verbunden, so daß durch den Palettenboden, die Füße und die Streben rechteckigen Öffnungen, sogenannte Gabeltaschen, gebildet werden, in die die Gabel eines Gabelstaplers eingreifen kann. Auch andere Transportgestelle wie beispielsweise geschlossene Transportbehälter und dergleichen sind häufig mit entsprechenden Gabeltaschen ausgestattet.

In dem europäischen Patent Nr. 0 139 810 wird ein Transportcontainer beschrieben, der ein an mindestens einer Längsseite offenes Rahmenwerk aufweist, so daß die Paletten mit einem Gabelstapler von der offenen Längsseite her wie bei einem Regal in den Container eingeschoben werden können. Der Container kann einerseits als Frachtcontainer für den Transport von Gütern auf Lastkraftwagen, Eisenbahnwaggons und dergleichen eingesetzt werden und kann andererseits mit Inhalt am Bestimmungsort abgesetzt und als Regallager genutzt werden. Die Ladefläche des Containers wird durch rechtwinklig zur Ladekante in die Tiefe des Containers verlaufende Winkelprofile gebildet, die als Führungsschienen für die Füße der Paletten dienen. Während des Transports werden somit die beim Beschleunigen und Bremsen auftretenden Trägheitskräfte durch die hochgekanteten Schenkel der Winkelprofile aufgenommen. Bei beidseitig bedienbaren Containern dieser Art ist vielfach in der Längsmittelebene des Containers eine Schiene oder niedrige Wand vorgesehen, die ein Durchschieben der Paletten über die Mitte hinaus verhindert. Die offenen Bedienungsseiten des Containers können während des Transports beispielsweise durch Schiebetore oder -planen geschlossen oder durch Haltestangen oder -gurte gesichert werden.

In der gleichzeitig mit der vorliegenden Anmeldung von der selben Anmelderin eingereichten Patentanmeldung mit dem Titel "Transportpalette" wird eine Vorrichtung beschrieben, mit der mehrere aufrecht stehende Fässer starr auf einer Flachpalette fixiert werden können. Wenn die so gebildeten Einheiten aus Palette und Fässern, die einen relativ hohen Schwerpunkt aufweisen, mit dem oben beschriebenen Container transportiert werden, so besteht bei stärkeren Erschütterungen während des Transports, beispielsweise bei einem Pufferstoß auf einem Eisenbahnwaggon, die Gefahr, daß die Paletten mit den Fässern umkippen und die Fässer beschädigt werden. Das gleiche Problem tritt grundsätzlich auch bei anderen Transportgestellen oder Gebinden mit relativ hohem Schwerpunkt auf. Darüber hinaus können beim Transport mit dem Lkw auf unebener Fahrbahn auch hohe Vertikalbeschleunigungen auftreten, so daß die Paletten mit dem Lagergut aus den Führungsschienen herausspringen.

Der Erfindung liegt die Aufgabe zugrunde, eine konstruktiv einfach aufgebaute und einfach bedienbare Vorrichtung zu schaffen, die es gestattet, die Transportgestelle sicher auf der Ladefläche des Containers oder unmittelbar auf der Ladefläche eines Transportfahrzeugs zu arretieren.

Diese Aufgabe wird erfindungsgemäß mit den in den unabhängigen Ansprüchen 1 und 5 angegebenen Merkmalen gelöst.

Vorteilhafte Weiterbildungen und Ausgestaltungen der Erfindung sind in den Unteransprüchen angegeben.

Bei der Vorrichtung gemäß Ansprüchen 1 bis 4 werden die Paletten mit im Bereich der Ladekante angeordneten Halteklauen gesichert, die von innen oder von außen in die Gabeltaschen der Transportgestelle geschwenkt werden. Die Halteklauen sind auf einer gemeinsamen Welle angeordnet und können so mit Hilfe eines Hebels mit einem einzigen Handgriff in die Arretierungsstellung geschwenkt und durch axiale Verschiebung der Welle in der Arretierungsstellung verriegelt werden.

Bei der Lösung nach Anspruch 5 sind an der in der Tiefe der Ladefläche angeordneten Durchschubsicherung einzelne Dorne angebracht, die in die Gabeltaschen eingreifen, wenn die Paletten auf die Ladefläche geschoben werden.

In beiden Fällen greifen die Halteklauen bzw. die Dome über die unteren Schenkel der Gabeltaschen, so daß die Paletten nicht nach oben von der Ladefläche abgehoben werden können. Die Lösungen nach den Ansprüchen 1 und 5 lassen sich auch vorteilhaft miteinander kombinieren.

Im folgenden wird ein bevorzugtes Ausführungsbeispiel der Erfindung anhand der Zeichnungen näher erläutert.

Es zeigen:

Fig. 1    einen schematischen Grundriß eines Transportcontainers mit einer Sicherungsvorrichtung;

Fig. 2    eine Ausschnittsvergrößerung zu Figur 1;

Fig. 3    einen Schnitt längs der Linie III-III in Figur 2; und

Fig. 4    eine Stirnansicht des Transportcontainers im Bereich eines Betätigungshebels für die Sicherungsvorrichtung.

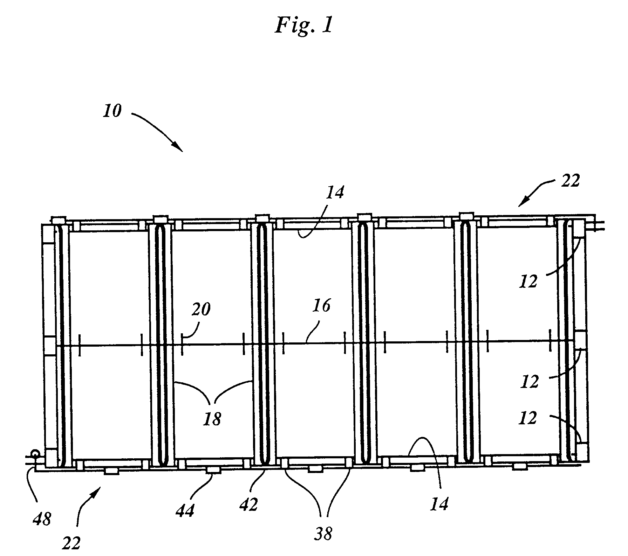

In Figur 1 ist der Grundriß eines an beiden Längsseiten offenen Transportcontainers 10 dargestellt, der ein tragendes Rahmenwerk aufweist, dessen senkrechte Stützen 12 ausschließlich in der Ebene der beiden Stirnflächen des Containers angeordnet sind. In den Boden des Containers sind zwei Auffangwannen 14 integriert, deren in der Längsmittelebene des Containers aneinandergrenzende Wände 16 dicht miteinander verschweißt und über die Ladefläche des Containers hinaus nach oben verlängert sind, so daß eine Durchschubsicherung für die in dem Container abgestellten Paletten gebildet wird. Die eigentliche Ladefläche wird durch in Höhe des oberen Randes der Auffangwannen 14 angeordnete, als Winkelprofile gestaltete Führungsschienen 18 gebildet. Im gezeigten Beispiel sind über jeder der Auffangwannen 14 fünf Paare von Führungsschienen 18 angeordnet, so daß insgesamt zehn Stellplätze für Paletten gebildet werden. Die vertikalen Schenkel der Führungsschienen-Paare sind jeweils im Bereich der Ladekante trichterförmig erweitert, um das Einschieben der Paletten zu erleichtern. An jedem Paletten-Stellplatz sind zwei von der Rückwand 16 der Auffangwanne vorspringende Dorne 20 vorgesehen, und längs der Ladekanten des Containers sind Arretierungsmechanismen 22 angebracht, die ebenso wie die Dorne 20 dazu dienen, ein Abheben der Paletten von den Führungsschienen zu verhindern.

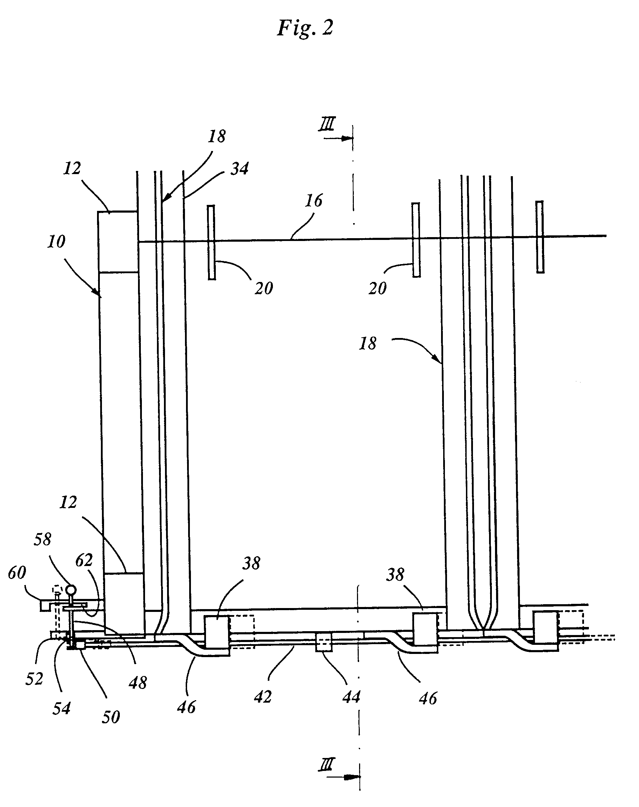

Die Wirkungsweise der Dorne 20 und der Arretierungsmechanismen 22 soll nachfolgend anhand der Figuren 2 bis 4 näher erläutert werden.

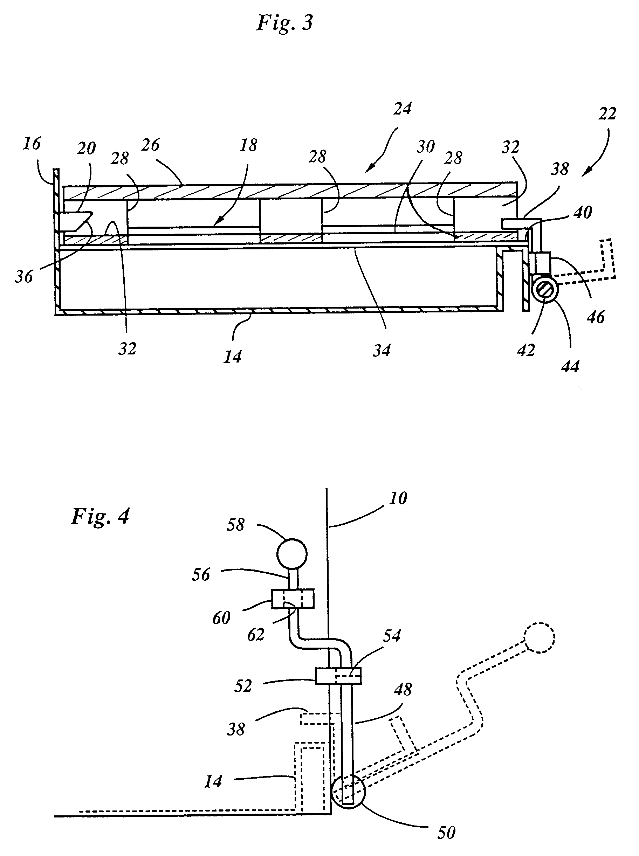

In Figur 3 ist eine auf die Führungsschienen 18 aufgesetzte Palette 24 dargestellt, die einen Palettenboden 26 und Füße 28 aufweist, die an der Unterseite durch Latten 30 miteinander verbunden sind. In den Zwischenräumen zwischen den Füßen 28 werden Gabeltaschen 32 gebildet, die nach unten durch die Latten 30 begrenzt sind. Die Dorne 20 sind dicht oberhalb der waagerechten Schenkel 34 der Führungsschienen 18 an der Rückwand 16 der Auffangwanne 14 angeordnet, so daß jeweils zwei Dorne in die Gabeltaschen 32 der Palette eingreifen, wobei die Latten 30 mit geringem Spiel in dem Zwischenraum zwischen den Dornen 20 und den waagerechten Schenkeln 34 der Führungsschienen liegen. Am vorderen Ende sind die Dorne 20 mit einer abgeschrägten Rampenfläche 36 versehen, die zur Führung der Latten 30 dient, wenn die Paletten mit einem Gabelstapler auf die Führungsschienen aufgesetzt und bis zur Rückwand 16 der Auffangwanne vorgeschoben werden.

Am vorderen Rand der Auffangwanne 14, rechts in Figur 3, sind Halteklauen 38 angeordnet, die zu dem Arretierungsmechanismus 22 gehören. Die Halteklauen 38 sind an einer unterhalb der Ladekante 40 längs der Vorderfront des Containers verlaufenden Welle 42 befestigt und in solchen Längsabständen auf der Welle 42 angeordnet, daß jeweils zwei Halteklauen 38 in die Gabeltaschen 32 einer Palette eingreifen. Die Welle 42 ist drehbar und axial verschiebbar in Lagerhülsen 44 gelagert. Beim Be- und Entladen des Containers ist die Welle 42 in eine Winkelstellung gedreht, in der sich die Halteklauen 38 in der in Figur 3 gestrichelt eingezeichneten Freigabestellung unterhalb der Ebene der Führungsschienen 18 befinden. Zur Sicherung der Paletten während des Transports wird die Welle 42 im Gegenuhrzeigersinn in Figur 3 gedreht, so daß die Halteklauen 38 die in durchgezogenen Linien eingezeichnete Arretierungsstellung einnehmen. Die Welle 42 wird dann in Axialrichtung verschoben, so daß die Halteklauen 38 in an der Vorderfront des Containers befestigte Haken 46 eintreten. Auf diese Weise werden die Halteklauen 38 in der Arretierungsstellung verriegelt, so daß sie nicht in die Freigabestellung zurückgeschwenkt werden können.

An einem Ende der Welle 42, links in Figur 2, ist ein Hebel 48 angeordnet. Der Hebel 48 ist über ein Gelenk 50 so mit der Welle 42 verbunden, daß er zusammen mit der Welle um deren Längsachse schwenkbar und außerdem in einer die Längsachse der Welle enthaltenden Ebene relativ zu der Welle schwenkbar ist. An dem Container 10 ist oberhalb der Welle 42 eine Gabel 52 angeordnet, die mit einer Ausnehmung für den Mittelteil des Hebels 48 versehen ist. Wenn die Welle 42 mit den Halteklauen 38 in die Arretierungsstellung gedreht wird, so tritt der Hebel 48 in die Ausnehmung 54 ein. In diesem Zustand bildet die Gabel 52 einen Gelenkpunkt für den Hebel 48. Die Ränder der Ausnehmung 54 sind als konvexe Nasen ausgebildet, an denen der Hebel 48 bei der Schwenkbewegung um den Gelenkpunkt abrollen kann. Das obere Ende 56 des Hebels 48 bildet einen Betätigungsarm und ist mit einem Handknauf 58 versehen.

Oberhalb der Gabel 52 ist an dem Container 10 ein Sicherungstell 60 angebracht, das einen in der Draufsicht gemäß Figur 2 L-förmigen Schlitz 62 zur Aufnahme des Betätigungsarms 56 aufweist. Wenn der Hebel 48 in die Arretierungsstellung geschwenkt wird und in die Gabel 52 eintritt, so tritt der Betätigungsarm 56 in das offene Ende des Schlitzes 62 ein. In dieser Stellung, die in Figur 2 gestrichelt eingezeichnet ist, liegen die Halteklauen 38 seitlich neben den Haken 46. Um die Halteklauen hinter den Haken zu verriegeln, wird der Handknauf 58 des Hebels 48 nach rechts in Figur 2 in die in durchgezogenen Linien eingezeichnete Stellung geschwenkt. Der Hebel 48 dreht sich dabei um die Gabel 52, so daß sich sein unteres Ende mit dem Gelenk 50 nach links in Figur 2 bewegt und die Welle 42 mit den Verriegelungsklauen 38 in die Verriegelungsstellung gezogen wird. Der Betätigungsarm 56 des Hebels tritt dabei in den abgewinkelten Abschnitt des Schlitzes 62 ein, so daß er nicht mehr um die Achse der Welle 42 geschwenkt werden kann.

Auf diese Weise können mit Hilfe des Arretierungsmechanismus 22 sämtliche Paletten auf einer Seite des Containers mit einem einzigen Handgriff so gesichert werden, daß sie weder nach vorn aus den Führungsschienen 18 herausrutschen noch nach oben von den Führungsschienen abgehoben werden können.

**Patentansprüche**

1. Vorrichtung zur Sicherung von mit Gabeltaschen (32) versehenen Transportgestellen (24) auf der Ladefläche eines Transportfahrzeugs oder Containers (10) , dadurch **gekennzeichnet**, daß unterhalb der Ladefläche (18) längs der Ladekante des Transportfahrzeugs oder Containers eine drehbare Welle (42) angeordnet ist, an der mehrere Halteklauen (38) derart in Längsabständen angeordnet sind, daß sie durch Drehen der Welle in eine Arretierungsstellung schwenkbar sind, in der sie in die Gabeltaschen (32) der auf der Ladefläche stehenden Transportgestelle (24) eingreifen, und daß die Welle durch einen Verriegelungsmechanismus (46,48) in einer der Arretierungsstellung der Halteklauen entsprechenden Winkelstellung verriegelbar ist.

2. Vorrichtung nach Anspruch 1, dadurch **gekennzeichnet**, daß der Verriegelungsmechanismus mehrere an der Ladekante des Transportfahrzeugs oder Containers befestigte Haken (46) aufweist, deren freie Enden parallel zu der Welle (42) gerichtet sind und jeweils hinter den von der Welle aufragenden Schenkel einer der Halteklauen (38) greifen und daß die Welle zur Entriegelung axial in eine Stellung verschiebbar ist, in der die Halteklauen aus dem Eingriff der Haken heraustreten.

3. Vorrichtung nach Anspruch 2, **gekennzeichnet** durch einen gelenkig mit rechtwinklig zu der Welle (42) orientierter Gelenkachse an der Welle befestigten Hebel (48), der bei der Drehung der Welle in eine an dem Transportfahrzeug oder Container befestigte Gabel (52) eintritt und der einen über die Gabel hinausragenden Betätigungsarm (56) bildet und um das durch die Gabel gebildete Drehzentrum schwenkbar ist.

4. Vorrichtung nach Anspruch 3, dadurch **gekennzeichnet**, daß an dem Transportfahrzeug oder Container ein Sicherungsteil (60) angebracht ist, das einen Schlitz (62) mit einem zu dem Betätigungsarm (56) des Hebels (48) hin offenen ersten Abschnitt und einem hierzu rechtwinkligen zweiten Abschnitt aufweist, der den Betätigungsarm aufnimmt, wenn sich die Welle in der Verriegelungsstellung befindet.

5. Vorrichtung zur Sicherung von mit Gabeltaschen (32) versehenen Transportgestellen (24) auf der Ladefläche eines Transportfahrzeugs oder Containers (10), bei dem die Ladefläche (18) auf der der Ladekante entgegengesetzten Seite durch eine Durchschubsicherung (16) für die Transportgestelle begrenzt wird, insbesondere nach einem der Ansprüche 1 bis 4, **gekennzeichnet** durch in Abstand oberhalb der Ladefläche (18) starr an der Durchschubsicherung (16) angebrachte Sicherungsdorne (20), die in die Gabeltaschen (32) der Transportgestelle eingreifen, wenn diese auf die Ladefläche aufgeschoben werden.

*Fig. 1*

*Fig. 2*

## Fig. 3

## Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | CH-A-554 798 (THYSSEN INDUSTRIE)<br>* Spalte 1, Absatz 1 *<br>* Spalte 2, Zeile 28 - Zeile 44; Abbildungen 1-3 *<br>--- | 1 | B60P7/13<br>B61D45/00<br>B65D88/12 |
| D,A | EP-A-0 139 810 (HOFFMANN INDUSTRIEBAU)<br>----- | | |

| RECHERCHIERTE SACHGEBIETE (Int. Cl.5) |
|---|
| B60P<br>B61D<br>B65D |

Der vorliegende Recherchenbericht wurde für alle Patentansprüche erstellt

| Recherchenort | Abschlußdatum der Recherche | Prüfer |
|---|---|---|
| BERLIN | 06 JULI 1992 | SPETTEL J.D.M.L. |

EPO FORM 1503 03.82 (P0403)